# EUROPÄISCHE PATENTSCHRIFT

(11) **EP 0 788 584 B1**
(45) Veröffentlichungstag und Bekanntmachung des Hinweises auf die Patenterteilung: **28.04.1999**
(21) Anmeldenummer: 95944811.9
(22) Anmeldetag: 24.10.1995
(51) Int. Cl.: F03B 13/10, H02K 7/18

(54) **KÜHLSYSTEM FÜR EINEN IN EINEM MIT FLIESSWASSER UMGEBENEN BEHÄLTER ANGEORDNETEN GENERATOR**
COOLING SYSTEM FOR A GENERATOR IN A TANK SURROUNDED BY RUNNING WATER
SYSTEME DE REFROIDISSEMENT POUR GENERATEUR CONTENU DANS UNE CUVE ENTOUREE D'EAU EN ECOULEMENT

(30) Priorität: 28.10.1994 AT 2018/94
(43) Veröffentlichungstag der Anmeldung: 13.08.1997
(73) Patentinhaber: ELIN ENERGIEVERSORGUNG GESELLSCHAFT m.b.H., 1141 Wien (AT)
(72) Erfinder: SCHEIDL, Walter, A-8160 Weiz (AT)
(74) Vertreter: Rieberer, Stefan, Dipl.-Ing.
(86) Internationale Anmeldenummer: AT9500210
(87) Internationale Veröffentlichungsnummer: WO9613662

(56) Entgegenhaltungen:
- WO-A-90/05403
- FR-A- 1 129 191
- FR-A- 1 267 170
- PROCEEDINGS OF THE AMERICAN POWER CONFERENCE, VOL.41, CHICAGO, IL, USA, 23-25 APRIL 1979, 1979, CHICAGO, IL, USA, ILLINOIS INST. TECHNOL, USA, Seiten 1008-1014, HORN F J ET AL 'Lawrence hydroelectric project bulb generators'
- BROWN BOVERI REVIEW, JULY 1974, SWITZERLAND, Bd. 61, Nr. 7, ISSN 0007-2486, Seiten 332-335, SCHWANDA J ET AL 'Die Konstruktion direkt angetriebener Rohrturbinen-Generatoren'

## Beschreibung

Die Erfindung betrifft ein Kühlsystem für einen in einem mit Fließwasser umgebenen Behälter angeordneten Generator, insbesondere Rohrturbinengenerator oder Turbogenerator, mit einem Luft/flüssigkeits-Wärmetauscher im Inneren des Behälters, der flüssigkeitsseitig mit Leitungen verbunden ist, sowie einen Rohrturbinengenerator bzw. Turbogenerator mit einem Kühlsystem dieser Art.

Der Generator wird dabei von einer Turbine angetrieben.

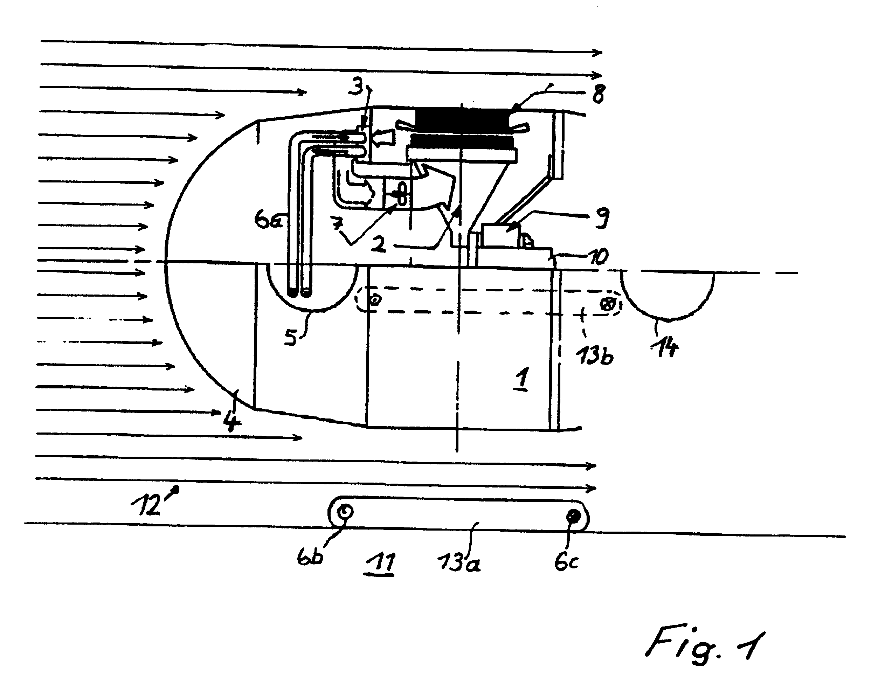

Der Stand der Technik kennt zwei Hauptgruppen an Kühlsystemen für solche Generatoren:
1) Luftkühlsysteme und
2) Flüssigkeitskühlsysteme.
Luftkühlsysteme sind in drei Varianten bekannt:
a) Frischluftkühlsysteme, bei denen der zu kühlende Generator unterhalb eines relativ großen Schachtes angeordnet ist, so daß Abwärme nach oben durch den Schacht entweichen kann, wobei kühle Frischluft ebenso durch den Schacht zum Generator geführt werden kann. Solche Systeme haben den Nachteil, daß sie nicht besonders effizient sind und stark von Umgebungsbedingungen, wie Lufttemperatur, abhängig sind. Außerdem benötigen sie ein relativ großes Bauvolumen im Bereich des Schachtes, was den verfügbaren Querschnitt für den Wasserdurchtritt zur Turbine reduziert.
b) Umluftkühlsysteme (Rippenkühlung oder Fin-cooling), bei denen das Generatorgehäuse bzw. der Behälter, in dem sich der Generator unter Wasser befindet doppelschalig ausgeführt ist, um zwischen den Schalen die Generatorabluft durchzublasen, damit sich diese an der Außenschale des Behälters, die vom Fließwasser gekühlt wird, abzukühlen. Ein solches System ist beispielsweise in der FR B 1 129 191 beschrieben (Fig. 1). Dieses System vermeidet zwar die Nachteile gemäß a), es erfordert jedoch einigen mechanischen Aufwand bei der Herstellung der Doppelschale, da diese mittels geschweißten Stützblechen hergestellt werden muß. Die Doppelschale muß ja neben der Kühlfunktion auch die mechanische Tragfunktion des Behälters übernehmen. Vor allem im vorderen Bereich treten in der Regel große mechanische Belastungen auf, so daß die äußere dem Fließwasser zugewandte Schale zudem noch aus relativ massivem Stahlblech hergestellt werden muß, was wiederum einen ungünstigen Wärmeübergangswert von der erhitzten Abluft zum Fließwasser nach sich zieht.
c) Umluftkühlsysteme, bei welchen ein Luft-Kühlkreislauf vor dem Generator aus dem Behälter nach außen, vor diesem Behälter durch das Fließwasser und an der gegenüberliegenden Seite unmittelbar vor dem Generator wieder in den Behälter zurückgeführt ist, wobei in dem Kanal außerhalb des Behälters ein Luft-/Wasser-Wärmetauscher angeordnet ist. Ein Kühlsystem dieser Art ist in der bereits genannten FR B 1129 191 beschrieben (Fig. 5). Ein Nachteil dieses Systems liegt unter anderem darin, daß es durch den Kühlkreislauf zu einer Beeinträchtigung des Strömungsverhaltens des Fließwassers und somit zu einer unerwünschten Verringerung des Wirkungsgrades der Turbine führt. Diese Lösung ist daher für die Praxis nicht relevant.

An Flüssigkeitskühlsystemen gibt es zwei wesentliche Typen:
a) Frischwasserkühlung, bei der Leitungs- oder Brunnenwasser durch Rohre im Behälter zu einem Luft/Wasserkühler gepumpt werden, um dort die Abwärme aus der Generatorabluft aufzunehmen. Das dadurch erwärmte Frischwasser wird ins Turbinenabwasser geleitet.
b) Oberflächenkühlung, bei der in einem geschlossenen Kühlkreis Kühlflüssigkeit durch ein doppelschaliges Generatorgehäuse, das gleichzeitig dem unter Wasser angeordneten Behälter zur Aufnahme des Rohrturbinengenerators entspricht, und durch einen Luft-Wasserkühler gepumpt wird. Die Generatorabluft wird dabei über den Luft-Wasserkühler gekühlt und zur Kühlung des Generators benutzt. während das im Kühler erwärmte Wasser seine Wärme über die äußere Schale des Gehäuses bzw. Behälters an das Fließwasser abgeben soll. Eine solche Konstruktion ist beispielsweise in der FR B 267 170 und in der EP-A1-444039 der Anmelderin beschrieben. Obwohl ein solcher Aufbau sehr wirkungsvoll ist, birgt er dennoch die bereits unter 1b) angeführten Nachteile. Zudem ist die Kapazität eines solchen Kühlsystems eingeschränkt auf die zur Verfügung stehende und benutzbare innere Oberfläche des Generatorbehälters. Die Ausbildung der Doppelschale erhöht andererseits wieder den wirksamen Querschnitt des Behälters im Fließwasser, wodurch der nutzbare Strömungsquerschnitt bei gegebenem Rohrdurchmesser reduziert ist.

Der Erfindung liegt somit ausgehend vom erwähnten Stand der Technik die Aufgabe zugrunde, die erwähnten Probleme zu beseitigen und eine entsprechende neue Kühlung und insbesondere einen neuen gekühlten Rohrturbinengenerator zu schaffen. Die neue Kühlung soll einfach sein und die mechanische Tragkonstruktion des Behälters möglichst nicht beeinträchtigen. Sie soll möglichst ohne grossen Geräteaufwand auskommen und vor allem auch für Turbinen mit unterschiedlichsten Durchmessern (universell) einsetzbar sein. Sie sollen weiters kostengünstig herstellbar sein.

Gelöst werden diese Aufgaben durch ein Kühlsystem für einen Rohrturbinengenerator der eingangs genannten Art, bei welchem die Leitungen in einem geschlossenen Kreislauf zu wenigstens einem Flüssigkeits/Flüssigkeitswärmetauscher führen, der ausserhalb des Behälters im Bereich seitlich neben, oberhalb oder unterhalb des Generators angeordnet und mit dem Fliesswasser in Wärmeleitverbindung steht.

Die neuartige Kühlung verbindet in einer überraschend einfachen Art und Weise die Vorteile der kombinierten Flüssigkeits/Luftkühlung hinsichtlich des sicheren Abwärmetransportes und der geringen Dimensionen für die Kühlflüssigkeitsleitungen im Vergleich zu allfälligen Kühlluftleitungen mit den Vorteilen eines einfach herzustellenden Flüssigkeits/Flüssigkeitswärmetauschers, wie er für sich selbst bei anderen Anwendungsgebieten üblich sein mag. Erfindungsgemäss ist dieser Wärmetauscher nun nicht mehr Bestandteil des Behälters, so dass beides optimal auf die funktionellen Anforderungen ausgelegt werden kann. Der Behälter kann ohne Rücksicht auf Wärmeleitprobleme in seinen Wandungen ausgelegt werden und der Flüssigkeits/Flüssigkeitswärmetauscher kann hinsichtlich eines optimalen Wärmetausches ausgelegt werden, ohne die mechanische Festigkeit des Generatorgehäuses bzw. Unterwasserbehälters für den Generator (hydraulische, mechanische und Vibrations-Belastungen) aufweisen zu müssen. Der Konstrukteur hat im Rahmen der Erfindung einige Freiheit, einen optimalen Ort für die Wärmeabfuhr an das Fliesswasser zu wählen. Er wird dies nach den jeweiligen baulichen und örtlichen Gesichtspunkten durchführen. Aus der Wahl des Anbringungsortes des Flüssigkeits/Flüssigkeitswärmetauschers ergeben sich jeweils spezifische Vorteile.

Ist dieser Flüssigkeits/Flüssigkeitswärmetauscher im Bereich der Verkleidung des Generatoreinstiegschachtes angeordnet, so sind die Wege für die Kühlflüssigkeitsleitungen kurz.

Ist er zwischen dem Generatoreinstiegschacht und dem Turbineneinstiegschacht angeordnet, bzw. bildet er wenigstens einen Teil einer Verbindungswand zwischen den beiden Schächten, so wird ein bisher vorhandener Raum, der aus strömungstechnischen Gründen auch schon bisher drucklos verkleidet war, mit einer Art Verkleidung versehen, die als Zusatzeffekt die Abwärmeabfuhr mit sich bringt. Infolge der Druckfreiheit dieses Bereiches (Das Fließwasser steht mit dem Raum zwischen den beiden Schächten in direktem Kontakt.) sind dort die mechanischen Belastungen relativ gering. Der freie Fließwasserquerschnitt wird zudem nicht eingeengt.

Ist hingegen seitlich am Fundament des Behälters der Flüssigkeits/Flüssigkeits-Wärmetauscher des Generators befestigt, wobei vorzugsweise die Leitungen durch die Fundamentwand geführt sind, so bieten sich auch dort kurze Leitungsanschlußwege und eine stabile Montagemöglichkeit. Außerdem ist sichergestellt, daß selbst bei Niedrigwasser, bei dem der Wasserführungskanal möglicherweise nicht vollständig gefüllt ist, der Generator über das Fließwasser gekühlt wird.

Ist er hingegen an den Wänden des Wasserführungskanal montiert, so ergeben sich zwar längere Leitungswege, jedoch kann im Unterschied zur Befestigung am Generatorbehälter der Vorteil größerer Vibrationsarmut in Anspruch genommen werden. Außerdem ist eine allfällige Beeinflussung des Wärmeabgabeverhaltens des Wärmetauschers durch Abwärme, die durch den Behälter direkt nach außen abgegeben wird, vermieden.

Günstig ist ein Kühlsystem, bei dem der Flüssigkeits/Flüssigkeits-Wärmetauscher aus einem Metall mit hoher Wärmeleitfähigkeit z.B. Aluminium oder einer Aluminiumlegierung - insbesondere einer korrosionsfesten Aluminiumlegierung mit Kupfer und/oder Nickel - aufgebaut ist. Gewisse aggressive Flüssigkeit im Fließwasser können so dem Flüssigkeits/Flüssigkeits-Wärmetauscher nicht schaden. Oberflächenbeschichtungen, wie z.B. Eloxal liegen ebenso im Bereich des Möglichen. Wärmetauscher sind vollständig aus Nirosta denkbar, da erfindungsgemäß bei diesen der Wärmeübergangswiderstand infolge der geringen Wandstärke, die nur mehr geringe mechanische (hydraulische) Kräfte aufnehmen muß, klein gehalten werden kann.

Von Vorteil ist es, wenn zum beschleunigten Transport der Kühlflüssigkeit im Kreislauf zwischen dem Luft/Wasserkühler und dem Flüssigkeits/Flüssigkeitskühler Pumpen vorgesehen sind, die vorzugsweise außerhalb des Behälters angeordnet sind. Eine Anordnung im Inneren des Behälters ist dann nicht bevorzugt, wenn im Inneren des Behälters mit Vibrationen zu rechnen ist, die bei allfälligen Pumpantrieben Lagerschäden hervorrufen könnten.

Ein Rohrturbinengenerator mit einem erfindungsgemäßen Kühlsystem zeichnet sich durch Kompaktheit innerhalb der Generatorbehälterwandung aus.

Selbstverständlich umfaßt die Erfindung auch Getriebegeneratoren oder Schachtgeneratoren in einem Behälter mit erfindungsgemäßem Kühlsystem. Für solche Generatoren ist es auch denkbar, die Kühlung zweizuteilen, um auf allfällig unterschiedliche Kühlbedürfnisse des Generators und des Getriebes Rücksicht zu nehmen.

Die Erfindung deckt auch Kühlkombinationen, z.B. mit Öl/Flüssigkeitskühlern, die zusätzlich zu den Flüssigkeits/Luftkühlern einen eigenen Kühlkreislauf, z.B. für Schmiermittel aufweisen können und die Abwärme ebenso zu den außenliegenden Wärmetauschern führen.

Das Verwenden von Flüssigkeits/Flüssigkeits-Wärmetauschern per se ist zwar in den verschiedensten anderen Fachgebieten bekannt, jedoch ließ sich der Fachmann des Rohrturbinenbaus offensichtlich von anderen Überlegungen leiten, die ihn von der Anwendung solcher Wärmetauscher im Fließwasser eher abhielten. Deutlich wird dies bei dem Studium der Entwicklung des Kühlerbaus anhand der folgenden Dokumente: FR-1022783-B aus 1950, FR-B-1267170 aus 1960, dem Prospekt der Anmelderin "Bulb Type Generators" aus dem Jahr 1981 und der EP-B1-444059 aus dem Jahr 1989, die zeigen, daß man stets bemüht war, die Wärmetauscher zu integrieren und dabei erhebliche Schwierigkeiten in Kauf nahm.

Anhand eines beispielhaften, mittels Skizzen dargestellten Ausführungsbeispieles wird die Erfindung näher erläutert. Es zeigen dabei:
Fig. 1 einen symbolischen Teilschnitt durch eine erfindungsgemäße Kühleranordnung bei einem Rohrturbinengenerator.
Innerhalb einer Kanalführung, von der nur eine Wand 11 dargestellt ist, umströmt Fließwasser 12 einen Behälter 1 einer Rohrturbine bzw. eines Rohrturbinengenerators, von dem ein Stator 8 angedeutet ist. Eine der Strömrichtung des Fließwassers zugewandte Kuppel 4 des Behälters hat einiges an mechanischer Belastung durch den hydraulischen Druck und die Fließeigenschaften des Wassers auszuhalten. Die dort auftretenden dynamischen und statischen Kräfte werden auf den Behälter 1 verteilt und von dort in ein Fundament eingeleitet. Zwei Einstiegschächte 5 und 14 ermöglichen den Zugang zum Generator 2 bzw. zur Turbine oder zum Getriebe, die nicht gezeigt sind.

Der Rotor des Generators 2 ist an einer Welle 10, die ihn mit der Turbine verbindet, gehalten, diese in einem Lager 9 gegenüber einem nicht gezeichneten Fundament abgestützt. Der Generatorstator 8 befindet sich an der Innenwandung des Behälters 1, das optimal für die im Kanal herrschenden Druckverhältnisse und Belastungen ausgelegt ist.

Ein Flüssigkeits/Luftkühler 3 mit Gebläse 7 wird über Leitungen 6 mit gekühlter Kühlflüssigkeit versorgt, die durch einen Flüssigkeits/Flüssigkeitskühler 13 gepumpt wird. Es sind zwei Varianten der Wärmetauscheranbringung dargestellt: An der Wand 11 oder zwischen den Schächten 5 und 14. Die übrigen beschriebenen Anbringungsvarianten sind für den Fachmann so verständlich, daß auf eine weitere bildliche Darstellung verzichtet wurde.

Die Erfindung ist durch die beispielhafte Darstellung der (Figuren) nicht eingeschränkt. In ihrem Rahmen liegen vielmehr unterschiedliche Varianten und Ausführungen, auch solche mit Bauteilen, die zum gegenwärtigen Zeitpunkt noch nicht auf dem Markt sind-wie beispielsweise unterschiedliche Materialien mit den selben Eigenschaften wie die beschriebenen.

## Patentansprüche

1. Kühlsystem für einen in einem mit Fliesswasser (12) umgebenen Behälter (1) angeordneten Generator (2), insbesondere Rohrturbinengenerator oder Turbogenerator, mit einem Luft/flüssigkeitswärmetauscher (3) im Inneren des Behälters (1), der flüssigkeitsseitig mit Leitungen (6) verbunden ist, dadurch gekennzeichnet, dass die Leitungen (6) in einem geschlossenen Kreislauf zu wenigstens einem Flüssigkeits/Flüssigkeitswärmetauscher (13) führen, der ausserhalb des Behälters (1) im Bereich seitlich neben, oberhalb oder unterhalb des Generators (2) angeordnet und mit dem Fliesswasser (12) in Wärmeleitverbindung steht.

2. Kühlsystem nach Anspruch 1, dadurch gekennzeichnet, dass der Flüssigkeits/Flüssigkeitswärmetauscher (13) im Bereich der Verkleidung eines Generatoreinstiegschachtes (5) angeordnet ist.

3. Kühlsystem nach Anspruch 1 für Rohrturbinengeneratoren mit einem Generatoreinstiegschacht (5) und einem Turbineneinstiegschacht (14), dadurch gekennzeichnet, dass der Flüssigkeits/Flüssigkeitswärmetauscher (13b) zwischen dem Generatoreinstiegschacht (5) und dem Turbineneinstiegschacht (14) angeordnet ist bzw. wenigstens einen Teil einer Verbindungswand zwischen den beiden Schächten (5,14) bildet.

4. Kühlsystem nach Anspruch 1 für einen Rohrturbinengenerator (2) in einem Behälter (1), der über ein Fundament nach unten abgestützt ist, dadurch gekennzeichnet, dass der Flüssigkeits/Flüssigkeitswärmetauscher seitlich am Fundament des Generators (2) befestigt ist, wobei vorzugsweise die Leitungen (6) durch die Fundamentwand geführt sind.

5. Kühlsystem nach Anspruch 1 für eine Rohrturbine bzw. für einen Rohrturbinengenerator (2) in einem Wasserführungskanal, dadurch gekennzeichnet, dass der Flüssigkeits/Flüssigkeitswärmetauscher (13a) an wenigstens einer Wand (11) des Wasserführungskanals angeordnet ist.

6. Kühlsystem nach einem Jer vorhiergehenden Ansprüche, dadurch gekennzeichnet, dass der Flüssigkeits/Flüssigkeitswärmetauscher (13) aus einem Metall mit hoher Wärmeleitfähigkeit z.B. Aluminium oder einer Aluminiumlegierunginsbesondere einer korrosionsfesten Aluminiumlegierung mit Kupfer und/oder Nickel aufgebaut ist.

7. Kühlsystem nach einem der vorhergehenden Ansprüche, dadurch gekennzeichnet, dass zum beschleunigten Transport der Kühlflüssigkeit im Kreislauf zwischen dem Luft/Flüssigkeits-Wärmetauscher (7) und dem Flüssigkeits/Flüssigkeits-Wärmetauscher (13) Pumpen vorgesehen sind, die vorzugsweise ausserhalb des Behälters (1) angeordnet sind.

8. Rohrturbinengenerator bzw. Turbogenerator mit einem Kühlsystem nach einem der vorhergehenden Ansprüche.

## Claims

1. Cooling system for a generator (2) disposed in a container (1) surrounded by running water (12), in particular a tubular turbine generator or turbogenerator, with an air/liquid heat-exchanger (3) in the interior of the container (1), which is connected to lines (6) on the liquid side, characterised in that the lines (6) lead, in a closed circuit, to at least one liquid/liquid heat-exchanger (13) which is disposed outside the container (1) in the region laterally close to, above or below the generator (2) and is in heat-conducting communication with the running water (12).

2. Cooling system according to claim 1, characterised in that the liquid/liquid heat-exchanger (13) is disposed in the region of the casing of a generator entry shaft (5).

3. Cooling system according to claim 1 for tubular turbine generators having a generator entry shaft (5) and a turbine entry shaft (14), characterised in that the liquid/liquid heat-exchanger (13b) is disposed between the generator entry shaft (5) and the turbine entry shaft (14), or forms at least part of a connecting wall between the two shafts (5, 14).

4. Cooling system according to claim 1 for a tubular turbine generator (2) in a container (1) which is supported in the downward direction via a base, characterised in that the liquid/liquid heat-exchanger is fastened laterally to the base of the generator (2), the lines (6) preferably being routed through the wall of the said base.

5. Cooling system according to claim 1 for a tubular turbine or for a tubular turbine generator (2) in a water-conducting duct, characterised in that the liquid/liquid heat-exchanger (13a) is disposed on at least one wall (11) of the water-conducting duct.

6. Cooling system according to one of the preceding claims, characterised in that the liquid/liquid heat-exchanger (13) is constructed from a metal having high thermal conductivity, for example aluminium or an aluminium alloy - in particular a corrosion-resistant aluminium alloy with copper and/or nickel.

7. Cooling system according to one of the preceding claims, characterised in that, for the accelerated transport of the cooling liquid in the circuit between the air/liquid heat-exchanger (7) and the liquid/liquid heat-exchanger (13), pumps are provided which are preferably disposed outside the container (1).

8. Tubular turbine generator or turbogenerator having a cooling system according to one of the preceding claims.

## Revendications

1. Système de refroidissement pour un générateur (2) disposé dans une cuve (1) entourée d'eau en écoulement (12), en particulier un générateur de turbine bulbe, ou bien un turbo-générateur, avec un échangeur de chaleur air/liquide (3) installé à l'intérieur de la cuve (1), relié du côté liquide à des conduites (6), caractérisé en ce que les conduites (6) mènent, en un circuit fermé, à au moins un échangeur de chaleur liquide/liquide (13), qui est disposé à l'extérieur de la cuve (1), dans la zone située latéralement à côté, au-dessus et au-dessous du générateur (2) et est mis en liaison de conduction thermique avec l'eau en écoulement (12).

2. Système de refroidissement selon la revendication 1, caractérisé en ce que l'échangeur de chaleur liquide/liquide (13) est disposé dans la zone de l'habillage d'un puits d'accès au générateur (5).

3. Système de refroidissement selon la revendication 1, pour des générateurs à turbine bulbe avec un puits d'accès au générateur (5) et un puits d'accès à la turbine (14), caractérisé en ce que l'échangeur de liquide/liquide (13b) est disposé entre le puits d'accès au générateur (5) et le puits d'accès à la turbine (14), respectivement constitue au moins une partie d'une paroi de liaison entre les deux puits (5, 14).

4. Système de refroidissement selon la revendication 1, pour un générateur à turbine bulbe (2) installé dans une cuve (1), qui est soutenu vers le bas par une fondation, caractérisé en ce que l'échangeur de chaleur liquide/liquide est fixé latéralement sur la fondation du générateur (2), de préférence les conduites (6) étant guidées à travers la paroi de fondation.

5. Système de refroidissement selon la revendication 1, pour une turbine bulbe, respectivement pour un générateur à turbine bulbe (2) dans un canal de guidage d'eau, caractérisé en ce que l'échangeur de chaleur liquide/liquide (13a) est disposé en au moins une paroi (11) du canal de guidage d'eau.

6. Système de refroidissement selon l'une des revendications précédentes, caractérisé en ce que l'échangeur de chaleur liquide/liquide (13) est construit en un métal ayant une conductivité thermique élevée, par exemple en aluminium ou en alliage d'aluminium - en particulier un alliage d'aluminium résistant à la corrosion, comportant du cuivre et/ou du nickel.

7. Système de refroidissement selon l'une des revendications précédentes, caractérisé en ce que, pour accélérer le transport du liquide de refroidissement dans le circuit entre l'échangeur de chaleur air/liquide (7) et l'échangeur de chaleur liquide/liquide (13), sont prévues des pompes qui sont disposées de préférence hors de la cuve (1).

8. Générateur à turbine bulbe, respectivement turbogénérateur, équipé d'un système de refroidissement selon l'une des revendications précédentes.
